Europäisches Patentamt

European Patent Office

Office européen des brevets

(19)

(11) Numéro de publication: **0 324 696**
**A1**

(12) # DEMANDE DE BREVET EUROPEEN

(21) Numéro de dépôt: **89400112.2**

(22) Date de dépôt: **13.01.89**

(51) Int. Cl.⁴: **G 06 K 13/08**

(30) Priorité: **14.01.88 FR 8800350**

(43) Date de publication de la demande:
**19.07.89 Bulletin 89/29**

(84) Etats contractants désignés:
**BE CH DE ES GB IT LI NL SE**

(71) Demandeur: **SCHLUMBERGER INDUSTRIES**
**50, avenue Jean Jaurès**
**F-92120 Montrouge (FR)**

(72) Inventeur: **Holtzer, Dominique**
**7, rue Moncey**
**25000 Besancon (FR)**

**Seris, Georges**
**165, rue de Tolbiac**
**75013 Paris (FR)**

(74) Mandataire: **Dronne, Guy**
**SCHLUMBERGER INDUSTRIES 50, avenue Jean Jaurès**
**F-92120 Montrouge (FR)**

(54) **Dispositif de traitement de cartes.**

(57) Pour faciliter l'introduction de la carte dans le lecteur celui-ci est muni d'un élément externe de guidage (30). l'élément de guidage (30) comprend une table inférieure de guidage (32) qui est inclinée et deux bords de guidage (34) et (36). Le bord (34) est parallèle à la direction d'introduction de la carte.

Application aux lecteurs de cartes à mémoire électronique.

FIG. 2

EP 0 324 696 A1

# Description

## DISPOSITIF DE TRAITEMENT DE CARTES

La présente invention concerne un dispositif de traitement de cartes, notamment de cartes à mémoire électronique.

Il existe un grand nombre de machines qui délivrent des prestations à partir de cartes dans lesquelles des soldes sont mémorisés. Pour cela la machine doit comporter un dispositif de lecture/écriture qui permet un dialogue et un échange d'informations entre la machine et la carte. Un dispositif de lecture/écriture de cartes, ci-après appelé "lecteur de cartes" comporte en général une fente d'introduction de la carte, un passage de guidage de la carte pour amener celle-ci dans une position de traitement et des moyens de dialogue entre les informations stockées dans les circuits de la carte et les circuits de traitement de la machine de fourniture de prestations. Lorsque les cartes sont à mémoire électronique, les moyens de dialogue peuvent consister en un connecteur qui permet d'établir une liaison électrique entre des plages externes de contact de la carte, lorsque celle-ci est en position de traitement, et les circuits de traitement de la machine.

Dans les cas les plus courants de machines de fourniture de prestations, il n'est pas utile de prévoir des dispositions particulières pour faciliter l'introduction des cartes dans le lecteur au niveau de la fente d'introduction. En effet l'usager dispose de tout son temps pour réaliser cette opération. En revanche dans certains cas l'usager se trouve placer dans un environnement défavorable pour procéder à l'introduction de sa carte dans le lecteur. C'est par exemple le cas lorsque la machine est montée dans un véhicule de transport en commun pour prélever dans la carte détenue par l'usager le montant du trajet que celui-ci veut effectuer. D'une part le véhicule est en mouvement ce qui complique l'introduction. D'autre part un grand nombre d'usagers se présentent successivement pour utiliser la machine. Pour optimiser le fonctionnement du véhicule il est donc très souhaitable de placer les usagers dans des conditions telles qu'ils puissent introduire leurs cartes dans le lecteur le plus rapidement possible quels que soient la dextérité des usagers et les mouvements et trépidations auxquels ils peuvent être soumis. Or, dans les lecteurs de cartes connus, aucune disposition particulière n'est adaptée pour faciliter l'introduction de la carte dans la fente du lecteur.

Un objet de l'invention est de fournir un dispositif de traitement de cartes dans lequel l'introduction de la carte est facilité pour pouvoir être effectuée dans des conditions d'environnement défavorables.

Pour atteindre ce but le dispositif de traitement de carte se caractérise en ce qu'il comprend un boitier dans lequel la carte peut être introduite en vue de son traitement selon une direction d'introduction, une fente présentant un bord inférieur et un bord supérieur parallèles aux faces principales de ladite carte et deux bords latéraux selon la direction de l'épaisseur de la carte, pour introduire ladite carte dans ledit boitier et un ensemble de guidage externe audit boitier comprenant une table de guidage raccordée tangentiellement au bord inférieur de ladite fente et un premier bord de guidage perpendiculaire au plan principal de ladite table de guidage, sensiblement parallèle à la direction d'introduction, raccordé tangentiellement à un premier bord latéral de la fente, et présentant une hauteur sensiblement supérieure à l'épaisseur du corps de la carte.

De préférence l'ensemble de guidage comporte un deuxième bord de guidage faisant un angle $\underline{b}$ avec la direction d'introduction et raccordé tangentiellement audit deuxième bord latéral de ladite fente, ledit angle $\underline{b}$ étant compris entre 15 et 45 degrés.

L'invention sera mieux comprise à la lecture de la description qui suit d'un mode de réalisation de l'invention donné à titre d'exemple non limitatif. La description se réfère au dessin annexé sur lequel :

La figure 1 est une vue de côté du dispositif de traitement de cartes ;

La figure 2 est une vue de dessus selon la flèche A de la figure 1.; et

La figure 3 est vue en coupe verticale selon la ligne III-III de la figure 1.

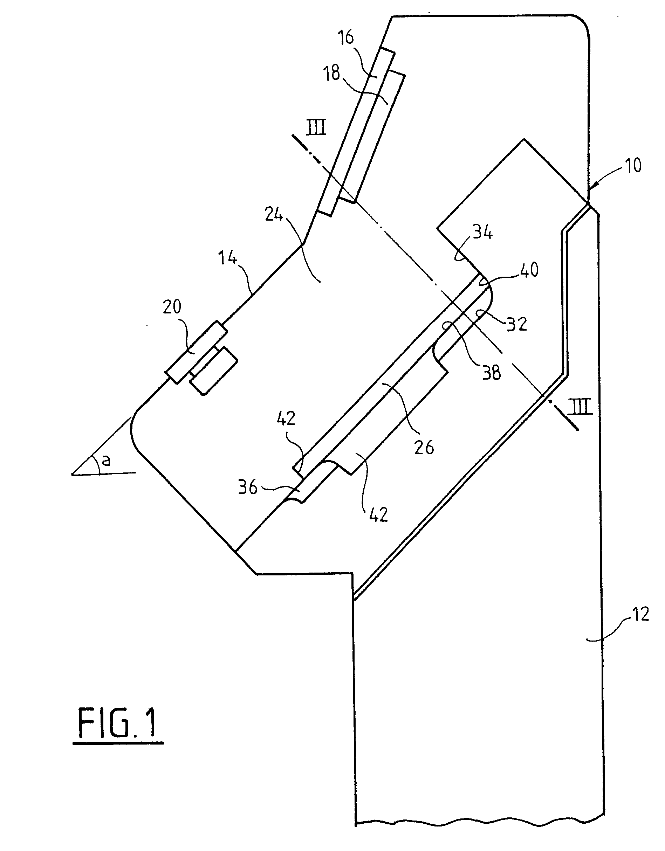

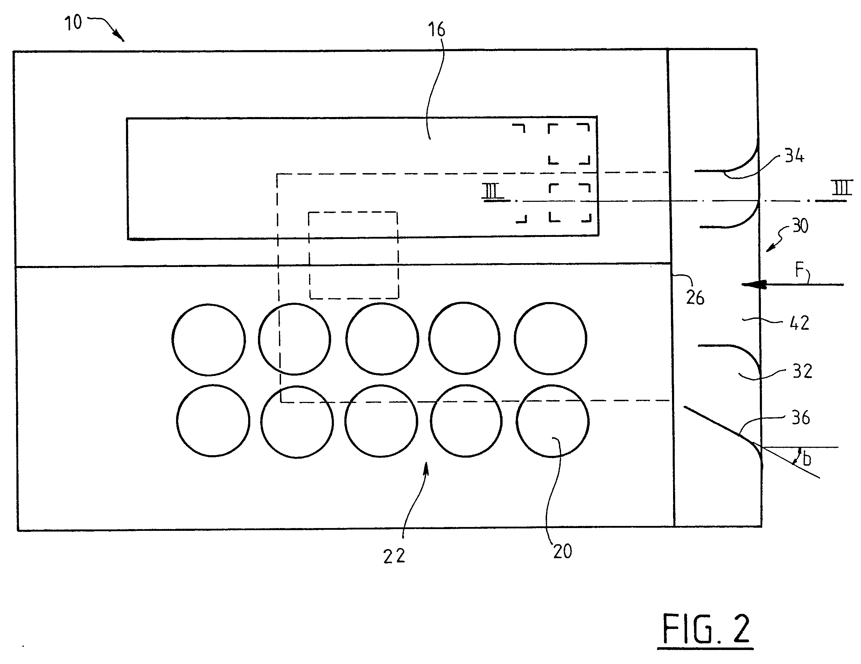

Les figures 1 et 2 montrent l'aspect extérieur de l'ensemble du dispositif de traitement de cartes. Il comprend essentiellement un boitier 10 et un pied 12 sur lequel est monté le boitier 10. Comme le montre la figure 1, le boitier 10 est monté sur le pied 12 en présentant une inclinaison $\underline{a}$ par rapport à l'horizontale. C'est en particulier le cas de la face supérieure 14 du boitier 10. La face 14 comprend essentiellement une fenêtre 16 derrière laquelle est monté un afficheur 18, et des touches 20 formant un clavier 22. Le côté droit 24 du boitier 10 présente une fente 26 pour l'introduction de cartes destinées à être traitées. La fente 26 permet d'introduire les cartes dans un dispositif de lecture/écriture de cartes qui est monté dans le boitier 10. La carte a une forme générale parallélépipèdique rectangle présentant deux faces principales rectangulaires et une épaisseur réduite par rapport aux dimensions des faces principales. Le dispositif de lecture/écriture est de type connu et il ne sera donc pas décrit plus en détails ici. Dans le cas où la carte est du type à mémoire électronique le lecteur comprend essentiellement une tête de connexion comportant des contacts flexibles ou tout autre moyen qui sont en contact avec les plages de contact externes de la carte lorsque celle-ci est en position de traitement. La tête de connexion est disposée dans un couloir de guidage de la carte qui prolonge la fente d'introduction 26 et qui est représenté en pointillés sur la figure 2. La tête de connexion permet donc d'assurer une liaison électrique entre les circuits de traitement, non représentés, du dispositif de traitement et le circuit électronique de la carte.

Comme le montre la figure 1 la fente 26, selon sa grande dimension, présente également l'inclinaison $\underline{a}$ par rapport à l'horizontale.

L'usager qui se sert du dispositif de traitement de carte est placé en face de la face supérieure 14 du boitier 10 et il introduit sa carte par la fente 26. L'usager a donc bien en face de lui l'afficheur 18 et le clavier 22. L'inclinaison a de la face 14 facilite l'actionnement des touches 20 et l'observation des informations apparaissant sur l'afficheur 18. Dans cette position l'usager doit introduire sa carte dans le côté droit 24 du boitier. Cette disposition permet à l'usager de se placer très près du boitier 10 grâce au fait que la carte est introduite dans la face latérale du boitier et non dans sa face frontale. En outre ce geste est plus naturel.

Pour aider l'usager à introduire correctement sa carte dans la fente 26 du lecteur, le boitier 10 comporte sur son bord 24 un élément de guidage externe 30. L'élément de guidage 30 comprend essentiellement une table inférieure 32 et deux parois latérales 34 et 36. La table 32 présente la même inclinaison générale a que la fente 26, et elle se raccorde tangentiellement au bord inférieur 38 de la fente 26. Les parois 34 et 36 sont perpendiculaires à la table 32 et se raccordent respectivement aux bords latéraux 40 et 42 de la fente 26. Si l'on appelle F la direction selon laquelle la carte doit être introduite la paroi latérale 34 la plus éloignée de l'usager est parallèle à la direction d'introduction F. En revanche la paroi latérale 36 fait un angle b avec la direction F. En outre, la hauteur de la paroi 36 est réduite, alors que celle de la paroi 34 est plus importante et est sensiblement supérieure à l'épaisseur du corps de la carte. La hauteur de la paroi 34 est au moins égale à 3 mm.

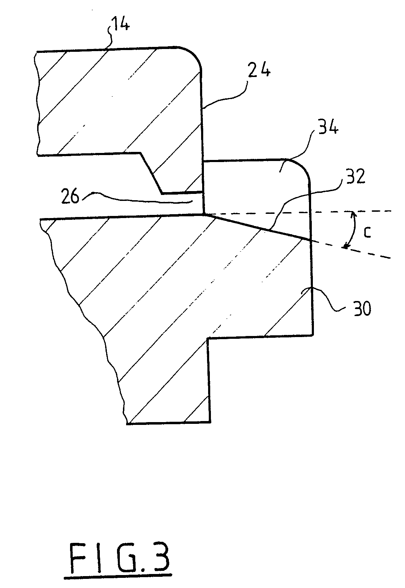

De plus si l'on considère le plan d'introduction de la carte, c'est-à-dire le plan parallèle à la direction F et passant par l'axe longitudinal de la fente 26, le plan général de la table 32 fait un angle c avec le plan d'introduction. Enfin comme le montrent les figures 2 et 3, la table 32 est munie d'une échancrure centrale 40 qui facilite la saisie de la carte par l'usager, après que celle-ci ait été éjectée du lecteur.

Il découle de la description précédente que le dispositif de traitement de cartes et notamment son lecteur de cartes sont particulièrement bien adaptés pour être mis en place dans des véhicules de transport en commun. En effet dans une telle situation, il est important que l'usager puisse introduire rapidement sa carte dans le lecteur malgré le mouvement du véhicule.

La description précédente montre qu'en particulier l'ensemble de guidage de la carte est spécialement bien adapté à cette fonction. Le fait que la table inférieure et la paroi 36 soient inclinées permet un guidage et un centrage de la carte vers la fente d'introduction 26 lorsque la carte n'est pas présentée correctement. Au contraire la paroi 34 qui est parallèle à la direction d'introduction forme une butée qui guide la carte et qui lui donne l'orientation correcte pour qu'elle pénètre aisément dans la fente d'introduction et dans le passage de guidage du lecteur.

L'inclinaison a de la face avant du boitier est comprise entre 25 et 70 degrés. De préférence cet angle vaut 45 degrés. Toutefois sa valeur doit être adaptée au niveau auquel se situe la fente d'introduction par rapport au sol.

L'inclinaison c de la table 32 est comprise entre 3 et 30 degrés. De préférence elle est de l'ordre de 5 degrés.

Enfin l'angle b que fait la paroi 36 avec la direction d'introduction est compris entre 15 et 45 degrés, de préférence 30 degrés.

## Revendications

1. Dispositif de traitement de carte présentant deux faces principales parallèles et une épaisseur caractérisé en ce qu'il comprend un boitier dans lequel la carte peut être introduite en vue de son traitement selon une direction d'introduction, une fente présentant un bord inférieur et un bord supérieur parallèles aux faces principales de ladite carte et deux bords latéraux selon la direction de l'épaisseur de la carte, pour introduire ladite carte dans ledit boitier et un ensemble de guidage externe audit boitier comprenant une table de guidage raccordée tangentiellement au bord inférieur de ladite fente et un premier bord de guidage perpendiculaire au plan principal de ladite table de guidage, sensiblement parallèle à la direction d'introduction, raccordé tangentiellement à un premier bord latéral de la fente, et présentant une hauteur sensiblement supérieure à l'épaisseur du corps de la carte.

2. Dispositif selon la revendication 1, caractérisé en ce que ledit élément de guidage comprend en outre un deuxième bord de guidage faisant un angle b avec la direction d'introduction et raccordé tangentiellement audit deuxième bord latéral de ladite fente, ledit angle b étant compris entre 15 et 45 degrés.

3. Dispositif selon l'une quelconque des revendications 1 et 2, caractérisé en ce que les bords supérieur et inférieur de ladite fente font un angle a, compris entre 25 et 70 degrés, avec l'horizontale.

4. Dispositif selon l'une quelconque des revendications 1 à 3, caractérisé en ce que le plan principal de ladite table de guidage fait un angle c avec un plan parallèle à la direction d'introduction et parallèle aux bords supérieur et inférieur de ladite fente, l'angle c étant compris entre 3 et 20 degrés.

5. Dispositif selon les revendications 1 à 4, caractérisé en ce que l'angle a est de l'ordre de 30 degrés, l'angle b est de l'ordre de 45 degrés et l'angle c est de l'ordre de 5 degrés.

6. Dispositif selon l'une quelconque des revendications 1 à 5, caractérisé en ce que ledit boitier comprend une face principale parallèle aux bords supérieur et inférieur de ladite fente et à la direction d'introduction, et une face latérale, ladite fente et ledit ensemble de guidage étant disposés sur ladite face latérale.

7. Dispositif selon la revendication 6, caractérisé en ce que ladite face principale du boitier est en regard d'un usager lorsque celui-ci veut introduire sa carte dans ledit dispositif et en ce que ladite face latérale du boîtier est sensiblement perpendiculaire à l'usager.

8. Dispositif selon l'une quelconque des revendications 6 et 7, caractérisé en ce qu'il comprend en outre un dispositif d'affichage et un clavier montés dans ladite face principale.

FIG.1

FIG. 2

EP 0 324 696 A1

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 172 258 (DOCUTEL) <br> * Figure 3; revendication 1 * | 1 | G 06 K  13/08 |
| Y | | 6-8 | |
| A | | 2-5 | |
| Y | FR-A-2 547 083 (D. LABORIER) <br> * Figure 2; page 5, lignes 16-26 * | 6-8 | |
| A | US-A-4 017 068 (J.W. McKEE) <br> * Figure 1; colonne 3, ligne 64 - colonne 4, ligne 34 * | 3,6 | |
| A | FR-A-2 549 623 (SYSTEM INNOVATION) <br> * Figure 1; page 5, lignes 1-3,24-26; page 7, lignes 26-30 * | 6-8 | |

DOMAINES TECHNIQUES
RECHERCHES (Int. Cl.4)

G 06 K

Le présent rapport a été établi pour toutes les revendications

| Lieu de la recherche | Date d'achèvement de la recherche | Examinateur |
|---|---|---|
| LA HAYE | 10-04-1989 | HENROTTE I. |